# EUROPEAN PATENT APPLICATION

(11) **EP 3 457 325 A1**
(43) Date of publication of application: **20.03.2019**
(21) Application number: 17191850.1
(22) Date of filing: 19.09.2017
(51) Int. Cl.: G06K 9/62, B61L 15/00, B61L 27/00, G06K 9/00, G06K 9/42, G05B 23/02

(54) **FAILURE IDENTIFICATION OF A RAIL VEHICLE COMPONENT**

(71) Applicant: Siemens Mobility GmbH, 81739 München (DE)
(72) Inventor: Sivalingam, Udhayaraj, 81379 München (DE)

(57) **Abstract**

A method for identifying a type of failure of a component of a rail vehicle according to the invention is disclosed. In a first step (S1) a sequence of m≥2 n-dimensional data points (**x**₁, ..., **x**ₘ) with n≥1 of the component within a time interval is provided. In a second step (S2) the sequence of the n-dimensional data points (**x**₁, ..., **x**ₘ) is clustered into K≥2 clusters (C₁, ..., C_{K}) by a clustering algorithm. In a third step (S3) a histogram of the number of data point occurrences in the time interval within each cluster (C₁, ..., C_{K}) is generated. In a fourth step (S4) the histogram is mapped to a particular type of failure of the component.

Furthermore, a non transitory computer program product (10) encoded with a computer program adapted to perform the method when executed on a computer is disclosed.

## Description

The present invention relates to a method for identifying a type of failure of a component of a rail vehicle and a non transitory computer program product configured to perform this method.

A rail vehicle, e.g. a train, is composed of a number of components. For continuous, uninterrupted and safe rail vehicle operation, all components on the rail vehicle should be in their best condition. These components need to be replaced as soon as they fail. Identifying the failure of a component is currently a time consuming and difficult task for the engineers.

It may happen that a specific component failure is not identified and some other component is replaced instead. This leads to frequent depot visitations of the same rail vehicle and unnecessary replacement of healthy components. Hence, identifying the component of failure instantly using sophisticated techniques is important to make the train operation time and cost efficient.

In some cases a single component may exhibit different failure conditions. That means, a component failure may relate to a loose connection of a monitoring sensor or a failure of a sensor itself. Identifying these different failure conditions help to make crucial decisions. It should be avoided that a diagnostic system shuts down the rail vehicle in the middle of the track as a result of a few important component failures. The state of the art techniques do not have the ability to differentiate between a sensor failure, loose connection and the component failure.

Whenever a critical component failure is detected, the rail vehicle is taken to the nearby depot. In the depot the engineers perform standard procedures to find the source of the problem. The standard procedure includes trial and error methods. Healthy components may be replaced instead of the failed components. It may occur that the problem is not found and the rail vehicle comes back to the depot frequently until the actual problem is found.

The problem consists of providing a method and a computer program product performing the method, where a particular type of failure can automatically be identified.

The method for identifying a type of failure of a component of a rail vehicle according to the invention comprises the following steps: in a first step a sequence of m≥2 n-dimensional data points (**x**₁, ..., **x**ₘ) with n≥1 of the component within a time interval is provided. In a second step the sequence of the n-dimensional data points (**x**₁, ..., **x**ₘ) is clustered into K≥2 clusters (C₁, ..., C_{K}) by a clustering algorithm. In a third step a histogram of the number of data point occurrences in the time interval within each cluster (C₁, ..., C_{K}) is generated. In a fourth step the histogram is mapped to a particular type of failure of the component.

The mapping of the histogram to a particular type of failure of the component may be performed by a classification algorithm. Such algorithms can be used reliably, quick and automatically.

A classification algorithm is a machine learning algorithm. The classification algorithm can identify certain similarities, structures or patterns within the histogram and associate them in the present context to a particular type of failure. A cluster algorithm, preferably unsupervised, is an algorithm that groups sequences of data points into a predefined number K of clusters. The number K may be suitably chosen in advance. The histogram represents a reduction of the degrees of freedom of the numerous data points suitable to better recognize certain patterns within the sequences of data points.

Instead of a classification algorithm the mapping of the histogram to a particular type of failure of the component may include the use of statistical methods to find a similarity between histograms and to map the histogram with a particular failure type. The employed group of statistical methods comprise chi-square distances, Kullback-Leibler divergences or Bahttacharyya distances, or performing a Kolmogorow-Smirnow test. However, other statistical methods may be used. The employed statistical methods provide a measure of how one probability distribution diverges from a second expected probability distribution.

An advantage of the method according to the invention is that the method can automatically identify a particular type of failure of a component. It merely requires a sequence of data points of a component of the rail vehicle as input and can then predict a particular type of failure. Furthermore, the method saves time and costs, since, for example, no depot visitation and inspection by engineers is required. Also, human errors are avoided. Further, the method comprises sophisticated means to identify or predict a particular type of failure in advance. Then, the identified type of failure can be readily rectified without time consuming usage of trial and error methods.

The classification algorithm may preferably be a neural network classifier. A neural network classifier is a very convenient and adaptive machine learning classifier.

The clustering algorithm may be an unsupervised clustering algorithm, preferably a K-cluster algorithm. This is a reliable algorithm to identify clusters within data sets.

The histogram is preferably normalized before mapping. The normalization can for example be performed on the number of data points within the K clusters occurring in the time interval. In other embodiments, the normalization may be performed on the time length of the time interval. The advantage of the normalization is that via normalization also different sequences of data points become comparable. Then, for example, similar patterns within the data points still become apparent upon normalization of the histogram.

The classification algorithm may be a supervised classification algorithm. Thereby the classification algorithm can be directly trained to be adapted to map to the right type of failure of a component.

The classification algorithm may be trained by a sequence of n-dimensional data points (**x**₁, ..., **x**ₘ), which represents a known particular type of failure of the component, and wherein the time interval of the sequence is chosen before and up to this particular type of failure has occurred. It can be assumed that the sequence of data points reflects the type of failure via abnormal behaviour, which then becomes apparent in the histogram.

The sequence of n-dimensional data points (**x**₁, ..., **x**ₘ) may be obtained from a maintenance log. The maintenance log may be associated with the rail vehicle the component is provided in. A maintenance log consists of history of failure information of the specific component such as date of failure, train no, etc. The data points are preferably obtained from diagnostic messages or from messages from remote data access (RDA) boxes of the rail vehicle.

The time interval may have an interval length between 0.1 to 24 hours, or between 1 to 100 days or preferably between 10 to 15 days. Depending on the type of failure, it may be sufficient to use data points within a smaller time interval. Here, an optimization is required, since the data points may not show the abnormal behaviour over the entire interval length. But, to provide a sufficiently predictable statistic, the interval length has to be large enough.

Preferably, the component of the rail vehicle is monitored with at least two sensors to collect the sequence of m≥2 n-dimensional data points (**x**₁, ..., **x**ₘ). Thereby, the data points can readily be obtained.

Furthermore, a non transitory computer program product encoded with a computer program adapted to perform the method according to one of the above embodiments when executed on a computer. The product has the same advantages as described in the context of the method.

The above described properties, features and advantages of the invention, and the technical means by which this is achieved, will become clearer in the context of the following description of the embodiments, which will be described in more detail in the figures. It shows:
- Fig. 1: a method and a non transitory computer program product according to the invention,
- Fig. 2: exemplary data points as a function of time for the illustration of the invention,
- Fig. 3: two exemplary clusters associated to a particular type of failure,
- Fig. 4: a histogram of the number of data point occurrences within each cluster for a certain time interval, and
- Fig. 5: a histogram of the number of data point occurrences within each cluster for a different time interval.

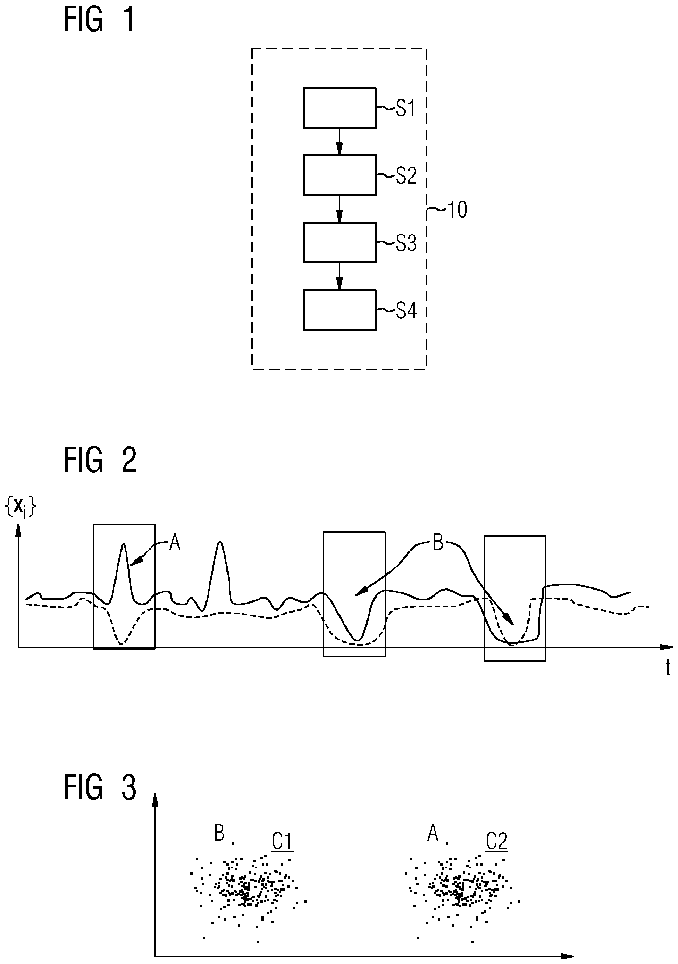

In Fig. 1, a method and a computer program product 10 according to the invention is shown.

In a first step S1, the method for identifying a type of failure of a component of a rail vehicle comprises providing a sequence of m≥2 n-dimensional data points (**x**₁, ..., **x**ₘ) with n≥1 of the component within a time interval. Here and in the following, **x**ᵢ with 1≤i≤m is element of Rⁿ.

In a second step S2, the sequence of the n-dimensional data points is clustered into K≥2 clusters (C₁, ..., C_{K}) by a clustering algorithm. The clustering algorithm may be preferably an unsupervised clustering algorithm. Preferably, the clustering algorithm may be a K-means clustering algorithm, but the invention is not restricted thereto. Expressed in other words, a function F (...) categorizes the data points (**x**₁, ..., **x**ₘ) into K≥2 clusters (C₁, ..., C_{K}).

In a third step S3, a histogram of the number of data point occurrences in the time interval within each cluster (C₁, ..., C_{K}) is generated. Expressed in other words another function G(...) is used which generates a histogram. The number of data point occurrences in the time interval is in other words a frequency, in particular a data point frequency.

In a fourth step S4, the histogram is mapped to a particular type of failure of the component. This may be done by a classification algorithm or by the use of statistical methods which provide measures of how one histogram diverges from a reference histogram which represents a component failure. Expressed in other words, a function H (...) maps the histogram to a particular type of failure of the component.

The statistical methods include chi-square distances, Kullback-Leibler divergences or Bahttacharyya distances, or Kolmogorow-Smirnow tests. However, other statistical methods may be used.

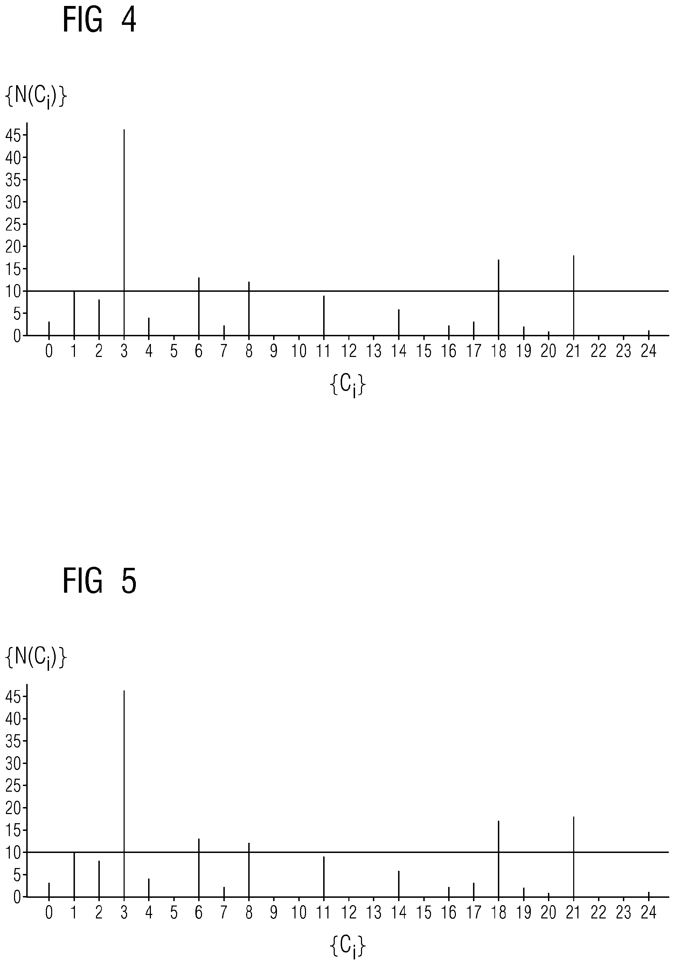

The classification algorithm used may preferably be a neural network classifier, but the invention is not restricted thereto. A classification algorithm is a type of machine learning algorithm. The classification algorithm is able to identify certain similarities, structures or patterns within the histograms and associate them in the present context to a particular type of failure of the component. That such histograms are suitable for mapping to a particular type of failure is demonstrated further in Figs. 4 and 5 for a given sequence of data points.

A cluster algorithm is an algorithm that groups sequences of data points (**x**₁, ..., **x**ₘ) into a predefined number K of clusters (C₁, ..., C_{K}). The Number K may be suitably chosen initially, for example K=10, K=30 or K=100, but the invention is not restricted thereto. The generated histogram based on the clustering represents a reduction of the degrees of freedom of the numerous data points suitable to recognize certain patterns or structures within the sequence of data points.

An advantage of the method according to the invention is that the method can preferably automatically identify a particular type of failure of a component. It requires only a sequence of data points (**x**₁, ..., **x**ₘ) of a component of the rail vehicle as input and can then predict a particular type of failure. The method saves time and costs, since, for example, no depot visitation and inspection by engineers is required. Further, the method comprises sophisticated means compared to the state of the art methods to identify or predict a particular type of failure in advance. Then, the identified type of failure may be readily rectified by, for example, exchanging the component, reconnecting a sensor or the like depending on the type of failure, without time consuming usage of trial and error methods.

In rail vehicles, there are a lot of sensors, which send important information about multiple components, which may provide the data points for the method according to the invention. A data point may comprise, for example, a temperature of a wheel bearing. The data points (**x**₁, ..., **x**ₘ) may also comprise for example other physical observables like pressure, time of use, rotation, speed velocity, voltage, current but also any other suitable quantity that may indicate an abnormal behaviour of the component before a failure may occur.

The component of the rail vehicle may be a wheel bearing, but the invention is not restricted thereto. Any component of the rail vehicle can be used for the method according to the invention. In particular, components that are more prone to failure or are critical components of the rail vehicle may preferably be recorded.

It is thus assumed that whenever a component is about to fail, the behaviour of the component is going to reflect this by an abnormal behaviour and can be represented by data points (**x**₁, ..., **x**ₘ). These data points (**x**₁, ..., **x**ₘ) may be sensor signals, but the invention is not restricted thereto.

The number m of data points (**x**₁, ..., **x**ₘ) may be for example m=10, m=100, m=1000 or any other positive natural number.

The number K of clusters may be chosen initially. K can be any suitable natural number, for example K=20, K=30 or K=100, for the underlying sequence of data points (**x**₁, ..., **x**ₘ) .

The histogram may be normalized before mapping. The normalization can, for example, be performed on the number of data points within the K clusters occurring in the time interval [t₁, t₂]. In other embodiments, the normalization may be performed on the length of the time interval [t₁, t₂]. The advantage of a normalization is that via normalization different sequences of data points (**x**₁, ..., **x**ₘ) become also comparable. Thereby, similar structures or patterns within the data points become identifiable upon normalization of the histogram.

The classification algorithm may be a supervised classification algorithm. The classification algorithm, for example a neural network classifier, may be trained by a sequence of m n-dimensional data points (**x**₁, ..., **x**ₘ), which represents a known particular type of failure of the component. The time interval [t₁, t₂] of the sequence may be chosen before and up to this particular type of failure occurred. This can, for example, be done with recorded data points collected in a maintenance log, which are stored before a particular type of failure occurred or is identified.

For example, the sequence of n-dimensional data points (**x**₁, ..., **x**ₘ) may be obtained from a maintenance log either to train the classification algorithm or to use them to predict the failure type of a component according to the invented method. Alternatively, the data points can also be provided in situ or, in other words, during the usage of the rail vehicle for example by sending or transmitting the data points while the rail vehicle is driven.

The component of the rail vehicle can be monitored with at least two sensors to collect the sequence of m≥2 n-dimensional data points (**x**₁, ..., **x**ₘ). For example, a first sensor may sense a first quantity, while a second sensor may sense a second quantity being different to the first quantity etc. Thereby n-dimensional data points, where every entry refers to a particular monitored quantity may be provided.

The time interval [t₁, t₂] may have an interval length, i.e. t₂-t₁, between 0.1 to 24 hours, or between 1 to 100 days or preferably between 10 to 15 days. Beside these preferred intervals, the invention is not restricted to a particular interval length.

Furthermore, a non transitory computer program product 10 encoded with a computer program adapted to perform the previously described method when executed on a computer. The computer or non transitory computer program product 10 may be located on board of the rail vehicle or it may be externally or stationary not on board of the rail vehicle. Also, a computer or data processing unit adapted to perform the method are disclosed.

In Fig. 2, exemplary data points (**x**₁,..., **x**ₘ) as a function of time t for the illustration of the invention are shown as toy model of the invention. Here, each data point (**x**₁,..., **x**ₘ) is two-dimensional. In reality, the data points (**x**₁,..., **x**ₘ) can have much more dimensions n≥2, for example n=30 or more.

In this particular example for illustrative purposes, a component of a rail vehicle is monitored by two sensor signals resulting in the data points (**x**₁,..., **x**ₘ). An abnormal behaviour may occur, when one value is high, while the other value is low. Such a constellation may cause a particular type of failure, indicated with failure A in the Fig. 2. Fig. 2 shows the two sensors signal over time.

Similarly, in this particular example, a constellation where both values are both particularly low may cause another type of failure, here named failure B, see the two constellations of this kind in the present Fig. 2. This simple example may demonstrate that the data points (**x**₁,..., **x**ₘ) may reflect the abnormal behaviour of a component before failure.

In Fig. 3, an example with two exemplary clusters (C1, C2) associated to a particular type of failure is shown. The x-axis represents the first sensor signal and the y-axis the second sensor signal. A first cluster is associated to the data points causing failure B where the value of the first sensor signal and the second sensor signal is low. A second cluster is associated to data points causing failure A where the first sensor signal is high and the second sensor signal is low. This example provides a basic understanding of the invention.

In Fig. 4, a histogram is shown, which is generated based on clustering of a sequence of data points (**x**₁, ..., **x**ₘ) by a cluster algorithm. The histogram shows the number of data point occurrences within a multitude of K different clusters {Cᵢ}=C₁, ...,C_{K}. For each cluster (C₁, ..., C_{K}) the number of occurrences N(Cᵢ) in the time interval [t₁,t₂] is shown in the histogram.

The underlying sequence of data points (**x**₁, ..., **x**ₘ) may be obtained from a maintenance log. The data points are, in this example, recorded in a time interval of 10-15 days and chosen before a particular known type of failure, i.e. a failure mode, of the component occurred.

In Fig. 5 a similar histogram as in Fig. 4 is shown. In comparison to Fig. 4 the histogram is obtained from data points from a different time interval [t₃, t₄] also before the same type of failure occurred. The histogram obtained, as can be readily seen, resembles the histogram in Fig. 4.

The similarity of the histograms of Fig. 4 and Fig. 5 demonstrate that the histograms obtained by the method according to the invention are a very suitable indicator of a particular type of failure of a component. In other words, the histograms encode the information of the type of failure and are thus very suitable measures for association or prediction of a particular type of failure.

Thus, if a similar histogram occurs, the histogram can be mapped to the same type of failure of the component, e.g. by using a classification algorithm.

Even though the invention is illustrated and described in detail by preferred embodiments, the invention is not restricted by the disclosed examples and other variations can be derived by the person skilled in the art without leaving the scope of protection of the invention.

## Claims

1. Method for identifying a type of failure of a component of a rail vehicle, comprising the steps:
- providing a sequence of n-dimensional data points (**x**₁, ..., **x**ₘ) of the component within a time interval (S1), where m≥2 and n≥1;
- clustering of the sequence of the n-dimensional data points into a number of K≥2 clusters (C₁, ..., C_{K}) by a clustering algorithm (S2);
- generating a histogram of the number of data point occurrences in the time interval within each cluster (C₁, ..., C_{K}) (S3); and
- mapping the histogram to a particular type of failure of the component (S4).

2. Method according to claim 1,
wherein the histogram is normalized before mapping.

3. Method according to claim 1 or 2,
wherein the mapping of the histogram to a particular type of failure of the component is performed by a classification algorithm.

4. Method according to claim 3,
wherein the classification algorithm is a neural network classifier.

5. Method according to claim 3,
wherein the classification algorithm is a supervised classification algorithm.

6. Method according to claim 5,
wherein the classification algorithm is trained by a sequence of m≥2 n-dimensional data points (**x**₁, ..., **x**ₘ) with n≥1, which represents a known particular type of failure of the component, and wherein the time interval of the sequence is chosen before and up to this particular type of failure has occurred.

7. Method according to claim 3,
wherein the mapping of the histogram to a particular type of failure of the component comprises the use of statistical methods, preferably by evaluating a chi-square distance, Kullback-Leibler divergence or Bahttacharyya distance, or performing a Kolmogorow-Smirnow test.

8. Method according to one of the previous claims,
wherein the clustering algorithm is an unsupervised clustering algorithm, preferably a K-means cluster algorithm.

9. Method according to any of the previous claims,
wherein the sequence of m≥2 n-dimensional data points (**x**₁, ..., **x**ₘ) is obtained from a maintenance log of the respective component.

10. Method according to one of the previous claims,
further comprises the step of monitoring the component of the rail vehicle with at least two sensors to collect the sequence of m≥2 n-dimensional data points (**x**₁, ..., **x**ₘ).

11. Method according to one of the previous claims,
wherein the time interval has an interval length of 1 to 100 days, preferably of 5 to 15 days.

12. A non transitory computer program product (10) encoded with a computer program adapted to perform the method according to claim 1 to 11 when executed on a computer.
